# EUROPEAN PATENT APPLICATION

(11) **EP 4 700 439 A1**
(43) Date of publication of application: **25.02.2026**
(21) Application number: 25192063.3
(22) Date of filing: 28.07.2025
(51) Int. Cl.: G01S 19/21

(54) **SYSTEM AND METHOD TO DETECT SPOOFING OF GNSS SIGNALS BY VALIDATING SATELLITE ORBITAL STATE VECTORS AND TIME**

(30) Priority: 21.08.2024 IN 202411063086; 04.10.2024 US 202418907243
(71) Applicant: Honeywell International Inc., Charlotte, NC 28202 (US)
(72) Inventor: MUNUSAMY, Rama Moorthi, Charlotte, 28202 (US); VAITHILINGAM, Ganesh Kumar, Charlotte, 28202 (US); ARUMUGAM, Shobana, Charlotte, 28202 (US); RAJENDRAN, Prema, Charlotte, 28202 (US)
(74) Representative: Haseltine Lake Kempner LLP

(57) **Abstract**

A GNSS receiver comprises a processor and a memory unit communicatively coupled to the processor, the memory unit comprising a database including authenticated past Orbital Element at Epoch (OEE) data for satellites in a GNSS constellation supported by the GNSS receiver. The processor is configured to receive GNSS signals from a first satellite that include first state vectors and a first time; determine calculated state vectors for the first satellite at the first time based on the authenticated past OEE data from the database using a first principles-based modeling technique; and determine whether a difference between the first state vectors from the GNSS signals and the calculated satellite state vectors exceeds a first threshold. In response to determining that the difference between the first state vectors from the GNSS signals and the calculated satellite state vectors exceeds the first threshold, an indication is outputted that the GNSS signals are spoofed.

## Description

### CROSS-REFERENCE TO RELATED APPLICATION

This application claims benefit of Indian Provisional Application No. 202411063086 filed on August 21, 2024, and titled SYSTEM AND METHOD TO DETECT SPOOFING OF GNSS SIGNALS BY VALIDATING SATELLITE ORBITAL STATE VECTORS AND TIME, the contents of which are incorporated herein in their entirety.

### BACKGROUND

Global Navigation Satellite System (GNSS) systems, such as the Global Positioning System (GPS), Galileo (European Union), and GLONASS (Russia), as well as Regional Navigation Satellite Systems, such as the Indian Regional Navigation Satellite System (IRNSS), are satellite-based navigation systems that provide precise location and timing information to users. This technology has become an integral and irreplaceable part of various sectors, including transportation, logistics, telecommunications, military, and emergency services. However, the increasing reliance on GNSS also makes it susceptible to malicious activities such as spoofing and jamming.

Spoofing is a technique where ground/space based radio transmitters are used to send strong counterfeit GNSS signals with wrong GNSS satellite position/timing information to deceive the GNSS receivers and make these receivers compute wrong position/time information. While there are many techniques available to detect GNSS signal spoofing, such techniques can be complex and/or unreliable.

Hence, a spoofing detection technique that is less complex and more reliable is needed.

### SUMMARY

A global navigation satellite system (GNSS) receiver comprises one or more processors, and a memory unit communicatively coupled to the one or more processors, wherein the memory unit includes a database that includes authenticated past Orbital Element at Epoch (OEE) data for satellites in a GNSS constellation supported by the GNSS receiver. The one or more processors are configured to receive GNSS signals from a first satellite that include first state vectors and a first time; determine calculated state vectors for the first satellite at the first time based on the authenticated past OEE data from the database for the first satellite using a first principles-based modeling technique; and determine whether a difference between the first state vectors from the GNSS signals from the first satellite and the calculated satellite state vectors exceeds a first threshold associated with parameters of the state vectors. In response to determining that the difference between the first state vectors from the GNSS signals from the first satellite and the calculated satellite state vectors does exceed the first threshold, an indication is outputted that the GNSS signals from the first satellite are spoofed.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for GNSS navigation with spoofing detection, according to one embodiment;
Figure 2 is a flow diagram of a spoofing detection method according to an example implementation, which can be performed in a GNSS receiver;
Figure 3 is a block diagram of a system 300 GNSS navigation with spoofing detection, according another embodiment; and
Figure 4 is a flow diagram for an operational method to perform spoofing detection, according to another example implementation.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method to detect spoofing of GNSS signals by validating satellite orbital state vectors and/or time, are described herein.

In the present approach, GNSS receivers can be implemented to detect spoofing using a software component and a secondary/external time source, without depending on inputs from any other external hardware systems or sensors, such as inertial navigation systems, multiple GNSS receivers, visual navigation systems, and the like. This approach provides a reliable, simple, and cost-effective solution for spoofing detection. This allows GNSS systems to be enhanced to detect and resist spoofing with less complexity and more reliable systems.

The present approach can be employed with a variety of GNSS implementations, including Global Positioning System (GPS), Galileo (European Union), GLONASS (Russia), Beidou (China), and Nav-IC (India).

The present system and method for spoofing detection can be implemented in the GNSS systems used in various types of vehicles, including air vehicles, ground vehicles, water vehicles, and outer space vehicles. For example, small Unmanned Aerial Vehicles (UAVs), Micro Air Vehicles (MAVs), and other like vehicles, where GNSS is the only navigation system used, the present anti-spoofing techniques are particularly useful.

### Spoofing Techniques

The signals received from GNSS satellites are prone to spoofing. A spoofed signal tricks the GNSS receiver to compute erroneous user position and time. The GNSS signals are widely spoofed by two methods: measurement spoofing, and data spoofing. In measurement spoofing, broadcasted GNSS signals are recorded in a different location or same location with time delay, using a radio transmitter. This makes the GNSS receiver compute erroneous position and time. In data spoofing, a radio transmitter broadcasts a GNSS signal with manipulated data, where the satellite position and/or time information is modified and retains other fields like pseudorandom noise (PRN) codes, satellite IDs, etc. to make the receiver believe that the signal is authentic. This also makes the GNSS receiver compute erroneous position and time.

The degraded GNSS receiver output can result in the following adverse effects in the aviation domain: inability to use GNSS for waypoint navigation; loss of area navigation (RNAV) approach capability; inability to conduct or maintain required navigation performance (RNP) operations, including RNP and RNP (authorization required) approaches; and triggering of terrain warnings, with pull up commands. Other adverse effects include inconsistent aircraft position on a navigation display; loss of automatic dependent surveillance-broadcast (ADS-B), wind shear, terrain, and surface functionalities; failure or degradation of air traffic management (ATM), air navigation services (ANS), communication-navigation-surveillance (CNS), and aircraft systems that use GNSS as a time reference; and potential airspace infringements and/or route deviations due to GNSS degradation.

Similarly, ground vehicles, marine vehicles, and low earth orbit space vehicles experience their own adverse effects in navigation due to GNSS spoofing. This brings the necessity to detect, report and create awareness to a flight crew, air traffic control (ATC), operators, governments, and the like, of GNSS spoofing events.

### Spoofing Detection

The present spoof detection system and method generally verify the authenticity of GNSS satellite state vectors and/or GNSS time derived from the received GNSS signal. When a GNSS signal is spoofed, the satellite state vectors and/or time information in the GNSS signal will be altered. So, validating these data is sufficient to detect a spoofing event. The GNSS signal can be declared as spoofed if either the satellite state vectors, or the time information is erroneous. Here, GNSS satellite state vectors are the satellite position, orbital elements, velocity, and acceleration.

The error in a satellite state vector can be identified by computing the satellite state vector using a "state vector prediction algorithm" and comparing the computed satellite state vector with satellite state vectors derived from the GNSS signal. If the errors in the state vectors are found to be beyond threshold values, the GNSS signal can be identified as spoofed. However, even if errors in the state vectors are found to be within an expected range, it could also be that the GNSS signal is spoofed by transmitting an authentic GNSS signal recorded elsewhere or in the past. To detect this scenario, the GNSS time can be validated by comparing it against the GNSS receiver internal clock and/or external clocks.

### Satellite Orbital State Vectors Validation

Satellite orbital state vector prediction algorithms can predict future satellite state vectors from a past Orbital Element at Epoch (OEE). Many state vector prediction algorithms are available, and widely used algorithms include the simplified perturbation models (e.g., SGP, SGP4, SDP4, SGP8, and SDP8). These state vector prediction algorithm models take the OEE as input and predict the satellite state vector for a given time. Commonly used OEE data include the Two-Line Element (TLE) data format set, which contains the orbital element state vectors of a specific earth orbiting satellite at a given epoch/time.

The GNSS signal contains the satellite orbital state vectors and the signal transmission time stamp. Upon receiving the signal by the GNSS receiver, the state vector prediction algorithm predicts the orbital state vectors for the time in the GNSS signal. The error/difference between these two state vectors should be zero ideally. The accuracy of the predicted state vectors depends on the accuracy of the prediction algorithm and how latest is the OEE data. Based on these factors, an error threshold based on the difference between predicted state vectors and GNSS signal state vectors can be used to classify the state vectors of the GNSS signal as spoofed or not.

### Satellite Time Validation

The GNSS signal time information needs to be validated only if the orbital state vectors are within the expected range. The GNSS signal can be spoofed by transmitting signals recorded elsewhere or recorded in the past. For this scenario, the time stamp in the GNSS signal is validated against the GNSS internal clock and/or an external clock to identify whether the GNSS time is erroneous or not.

Further details of various embodiments are described hereafter and with reference to the drawings.

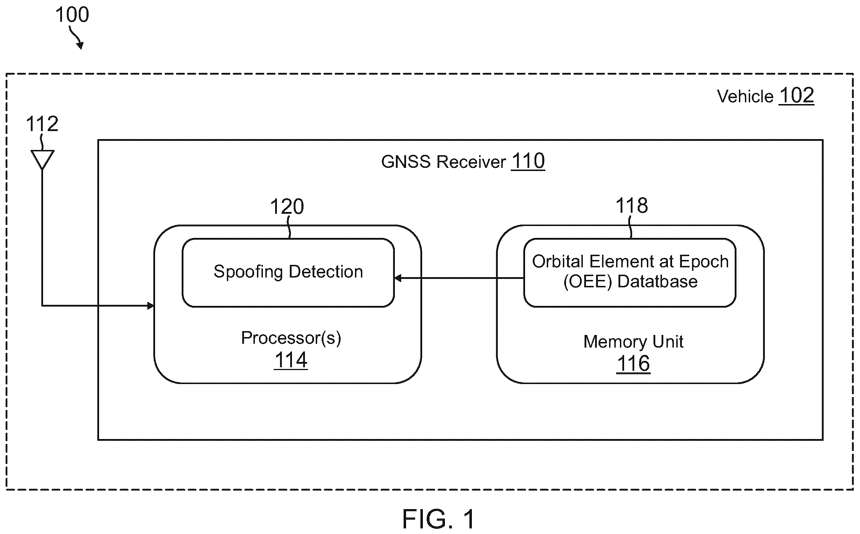

Figure 1 is a block diagram of a system 100 for GNSS navigation with spoofing detection, according to one embodiment. The system 100 is implemented for a vehicle 102, such as an aircraft, a land vehicle, a water vehicle, or the like. The system 100 generally includes a GNSS receiver 110, and at least one antenna 112 operatively coupled to GNSS receiver 110. The GNSS receiver 110 includes one or more processors 114, and a memory unit 116 communicatively coupled to the one or more processors 114. The memory unit 116 includes a database 118 that has authenticated past Orbital Element at Epoch (OEE) data for satellites in a GNSS constellation supported by GNSS receiver 110. The one or more processors 114 are configured to execute instructions for performing spoofing detection 120 as described hereafter.

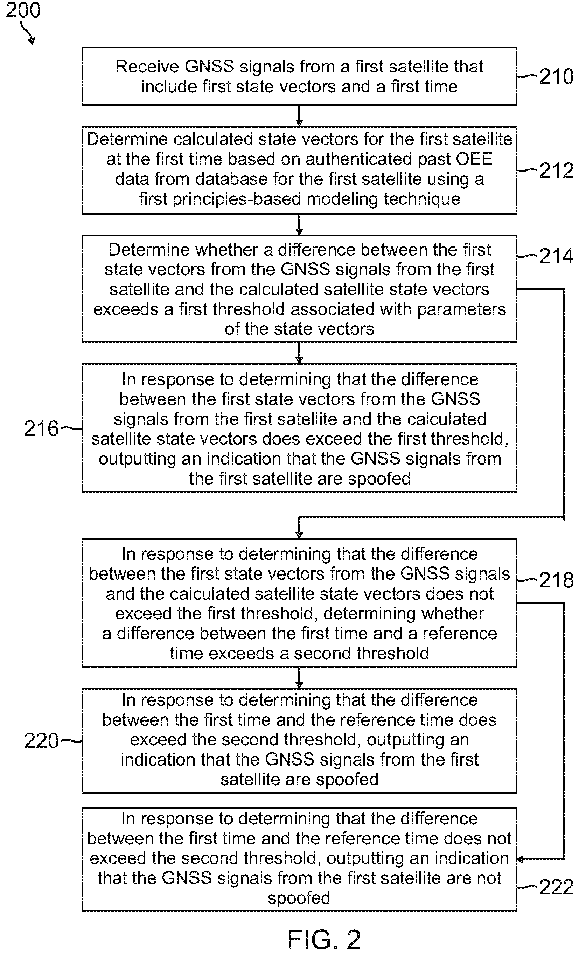

Figure 2 is a flow diagram of a spoofing detection method 200 according to an example implementation, which can be performed in GNSS receiver 110 using the one or more processors 114. The method 200 includes receiving GNSS signals from a first satellite that include first state vectors and a first time (block 210); and determining calculated state vectors for the first satellite at the first time based on authenticated past OEE data from a database (e.g., database 118) for the first satellite using a first principles-based modeling technique (block 212). For example, the first principles-based modeling technique can include using a simplified perturbations model.

The method 200 determines whether a difference between the first state vectors from the GNSS signals from the first satellite and the calculated satellite state vectors exceeds a first threshold associated with parameters of the state vectors (block 214). The first threshold can be determined based on an accuracy of the first principles-based modeling technique used to determine the calculated state vectors for the first satellite at the first time based on the authenticated past OEE data from the database for the first satellite, and an age of the authenticated past OEE data for the first satellite. In response to determining that the difference between the first state vectors from the GNSS signals from the first satellite and the calculated satellite state vectors does exceed the first threshold, the method 200 outputs an indication that the GNSS signals from the first satellite are spoofed (block 216).

In addition, in response to determining that the difference between the first state vectors from the GNSS signals and the calculated satellite state vectors does not exceed the first threshold, method 200 can determine whether a difference between the first time and a reference time exceeds a second threshold (block 218). The second threshold (time threshold) can be derived based on a position accuracy requirement of any specific application and accuracy of the clock. The reference time can be provided by a clock external to GNSS receiver 110 and/or by a clock internal to GNSS receiver 110. In response to determining that the difference between the first time and the reference time does exceed the second threshold, method 200 outputs an indication that the GNSS signals from the first satellite are spoofed (block 220).

Further, in response to determining that the difference between the first time and the reference time does not exceed the second threshold, method 200 outputs an indication that the GNSS signals from the first satellite are not spoofed (block 222). Thereafter the one or more processors 114 can determine a position of GNSS receiver 110 based on the GNSS signals from the first satellite in response to the indication that the GNSS signals from the first satellite are not spoofed.

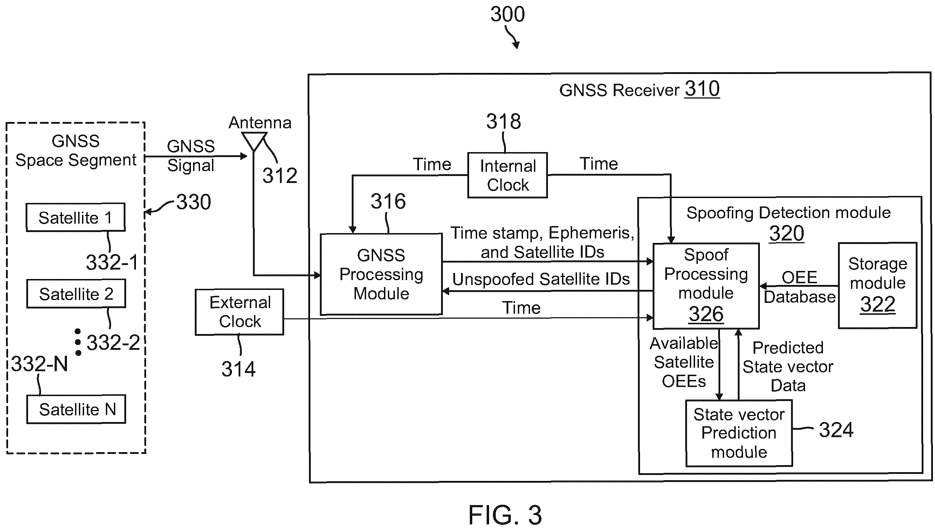

Figure 3 illustrates a system 300 for GNSS navigation with spoofing detection, according another embodiment. The system 300 generally includes a GNSS receiver 310, and at least one antenna 312 operatively coupled to GNSS receiver 310. An external clock 314 can be operatively coupled to GNSS receiver 310. The GNSS receiver 310 houses a conventional GNSS processing module 316, which is configured to receive a GNSS signal from antenna 312, and an internal clock 318, which provides time information to processing module 316. A spoofing detection module 320 resides within GNSS receiver 310, and is in operative communication with GNSS processing module 316. The spoofing detection module 320 includes a storage module 322, a state vector prediction module 324, and a spoof processing module 326. The GNSS receiver 310 is operative to receive a GNSS signal from a GNSS space segment 330, which includes a plurality of satellites 332-1, 332-2, ... 332-N.

The storage module 322 can be a non-volatile memory module that stores the latest Orbital Element at Epoch (OEE) database of the satellites in the GNSS constellation that GNSS receiver 310 supports. For example, when GNSS receiver 310 is a GPS receiver, the latest OEE database of the GPS constellation satellites are stored in storage module 322.

The TLE data of the satellites is made available frequently in the STK database from the Combined Space Operations Center under the United States Space Command's Combined Force Space Component Command. Similarly, other countries may also determine and maintain OEE data. Using the OEE/TLE information of any satellite, the orbital elements of the satellite at a given time in past/future can be computed.

The state vector prediction module 324 contains a satellite orbital element prediction algorithm, which reads the OEE data as an input and calculates the state vector of the satellite for the time of interest. The time of interest is the time stamp of the GNSS signal. The satellite's orbital elements are the output of the prediction algorithm, from which other parameters like position in Earth-centered inertial (ECI) or Earth-centered Earth-fixed (ECEF) frames, or latitude, longitude, altitude, velocity, acceleration, etc., can be derived as needed for spoofing detection.

The spoof processing module 326 is configured to receive the following inputs: predicted GNSS satellite's state vectors from state vector prediction module 324; state vectors and time decoded from the actual GNSS signal received from each satellite; and the current time from internal clock 318 and external clock 314, as well as OEE data of the satellites whose signals were received. The collected information is processed in spoof processing module 326 to detect a spoofed satellite, as described further hereafter.

In system 300, a GNSS satellite's latest OEE data is stored as a database in storage module 322. This database needs to be updated regularly as and when new authenticated OEE data becomes available. For example, the database can be stored/updated during preflight as well as during runtime. The GNSS receiver 310 receives a GNSS signal from one or more satellites that are in view of antenna 312, and decodes the GNSS signal to obtain a satellite identification (ID), state vectors (ephemeris), and a time stamp. Using the satellite ID, spoof processing module 326 fetches the corresponding satellite's OEE data from storage module 322. This OEE data and time stamp in the corresponding GNSS signal is sent to the state vector prediction module 324.

The state vector prediction module 324 predicts the satellite orbital elements for the input time and derives other state vector parameters such as position, velocity, acceleration, etc. The predicted orbital state vector data is then sent to spoof processing module 326 to perform a spoof detection process, which compares the predicted orbital state vectors with the state vectors decoded from the received GNSS signal to determine a differential value. If a difference (error) is beyond an allowable threshold, then the satellite is classified as spoofed. If the difference is within the threshold, then either the satellite is not spoofed, or the satellite is spoofed by transmitting an original GNSS signal recorded elsewhere or in the past. In this case, the signal time available in the received GNSS signal is validated. The spoofing detection module 320 receives a current time from internal clock 318 and external clock 314 for redundancy. If the difference between the signal time and current time (clock) is greater than a threshold value, then the satellite is classified as spoofed.

The above process is repeated for all satellites in GNSS space segment 330 from which antenna 312 receives a GNSS signal. In one example, after detecting any spoofed satellites, if a minimum of four unspoofed satellite signals are available, then GNSS receiver 310 can use these signals for computing a user position.

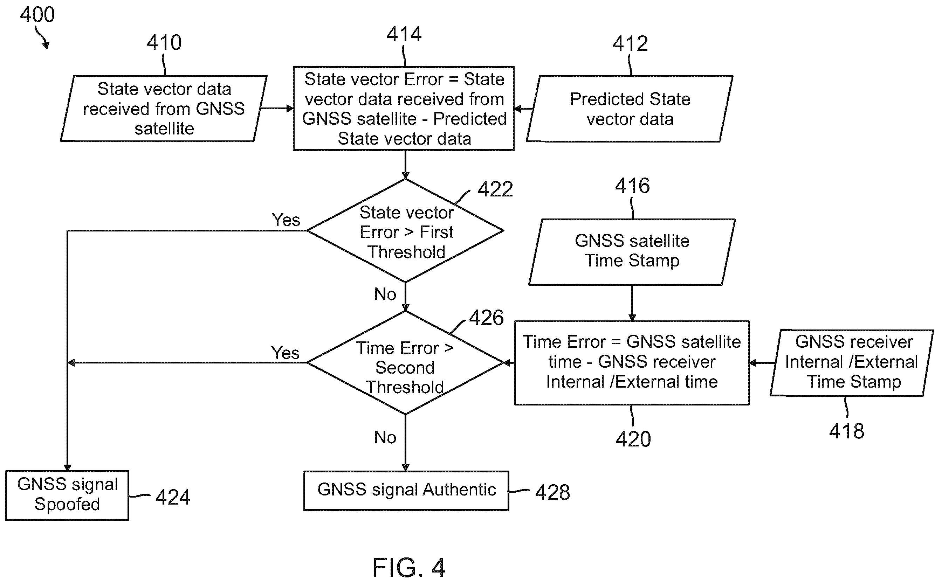

Figure 4 is a flow diagram for an operational method 400 to perform spoofing detection according to an example implementation of the present approach. Initially, a spoofing detection module receives state vector data from a GNSS satellite (block 410), and determines predicted or calculated state vector data for the GNSS satellite (block 412). A state vector error is then determined, which is the difference between the state vector data received from the GNSS satellite and the predicted state vector data (block 414). The spoofing detection module also receives a GNSS satellite time stamp (block 416), and GNSS receiver internal/external time stamp (block 418). A time error is then determined, which is the difference between the GNSS satellite time and the GNSS receiver internal/external time (block 420).

The method 400 determines whether the state vector error is greater than a first threshold (block 422). If the state vector error is greater than the first threshold, the method 400 outputs an indication that the GNSS signal is spoofed (block 424). If the state vector error is not greater than the first threshold, the method 400 determines whether the time error is greater than a second threshold (block 426). If the time error value is greater than the second threshold, the method 400 outputs an indication that the GNSS signal is spoofed (block 424). If the time error value is not greater than the second threshold, the method 400 outputs an indication that the GNSS signal is authentic (block 428).

The processing units and/or other computational devices used in the method and system described herein may be implemented using software, firmware, hardware, or appropriate combinations thereof. The processing unit and/or other computational devices may be supplemented by, or incorporated in, specially-designed application-specific integrated circuits (ASICs) or field programmable gate arrays (FPGAs). In some implementations, the processing unit and/or other computational devices may communicate through an additional transceiver with other computing devices outside of the navigation system, such as those associated with a management system or computing devices associated with other subsystems controlled by the management system. The processing unit and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, non-volatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a global navigation satellite system (GNSS) receiver, comprising: one or more processors; and a memory unit communicatively coupled to the one or more processors, wherein the memory unit includes a database that includes authenticated past Orbital Element at Epoch (OEE) data for satellites in a GNSS constellation supported by the GNSS receiver; wherein the one or more processors are configured to: receive GNSS signals from a first satellite that include first state vectors and a first time; determine calculated state vectors for the first satellite at the first time based on the authenticated past OEE data from the database for the first satellite using a first principles-based modeling technique; determine whether a difference between the first state vectors from the GNSS signals from the first satellite and the calculated satellite state vectors exceeds a first threshold associated with parameters of the state vectors; and in response to determining that the difference between the first state vectors from the GNSS signals from the first satellite and the calculated satellite state vectors does exceed the first threshold, outputting an indication that the GNSS signals from the first satellite are spoofed.

Example 2 includes the GNSS receiver of Example 1, wherein the one or more processors are further configured to: determine whether a difference between the first time and a reference time exceeds a second threshold; in response to determining that the difference between the first time and the reference time does exceed the second threshold, output an indication that the GNSS signals from the first satellite are spoofed; in response to determining that the difference between the first time and the reference time does not exceed the second threshold, outputting an indication that the GNSS signals from the first satellite are not spoofed.

Example 3 includes the GNSS receiver of Example 2, wherein the reference time is provided by a clock external to the GNSS receiver and/or by a clock internal to the GNSS receiver.

Example 4 includes the GNSS receiver of any of Examples 1-3, wherein the first threshold is determined based on an accuracy of the first principles-based modeling technique used to determine the calculated state vectors for the first satellite at the first time based on the authenticated past OEE data from the database for the first satellite and an age of the authenticated past OEE data for the first satellite.

Example 5 includes the GNSS receiver of any of Examples 1-4, wherein the one or more processors are further configured to determine a position of the GNSS receiver based on the GNSS signals from the first satellite in response to an indication that the GNSS signals from the first satellite are not spoofed.

Example 6 includes the GNSS receiver of any of Examples 1-5, wherein the first principles-based modeling technique includes using a simplified perturbations model.

Example 7 includes the GNSS receiver of any of Examples 1-6, wherein the GNSS receiver is implemented in a vehicle.

Example 8 includes the GNSS receiver of Example 7, wherein the vehicle comprises an aerial vehicle, a ground vehicle, a marine vehicle, or an outer space vehicle.

Example 9 includes a method comprising: receiving a global navigation satellite system (GNSS) signal in a GNSS receiver, onboard a vehicle, from a first satellite; decoding the GNSS signal in the GNSS receiver to obtain orbital state vector data and a first time for the first satellite; obtaining calculated state vector data for the first satellite, based on authenticated past orbital element at epoch (OEE) data from a database for the first satellite, using a first principles-based modeling technique; and determining whether a difference between the orbital state vector data and the calculated state vector data exceeds a first threshold; wherein: in response to determining that the difference between the orbital state vector data and the calculated state vector data does exceed the first threshold, outputting an indication that the GNSS signal from the first satellite is spoofed; in response to determining that the difference between the orbital state vector data and the calculated state vector data does not exceed the first threshold, determining whether a difference between the first time and a reference time exceeds a second threshold; in response to determining that the difference between the first time and the reference time does exceed the second threshold, outputting an indication that the GNSS signal from the first satellite is spoofed; in response to determining that the difference between the first time and the reference time does not exceed the second threshold, outputting an indication that the GNSS signal from the first satellite is not spoofed.

Example 10 includes the method of Example 9, wherein the reference time is provided by a clock external to the GNSS receiver and/or by a clock internal to the GNSS receiver.

Example 11 includes the method of any of Examples 9-10, wherein the first principles-based modeling technique includes using a simplified perturbations model.

Example 12 includes the method of any of Examples 9-11, wherein the vehicle comprises an aerial vehicle, a ground vehicle, a marine vehicle, or an outer space vehicle.

Example 13 includes a system comprising: an antenna configured to receive satellite signals from a plurality of global navigation satellite system (GNSS) satellites, the antenna located on a vehicle; and a GNSS receiver onboard the vehicle and operatively coupled to the antenna, the GNSS receiver comprising: a GNSS processing module configured to receive the satellite signals from the antenna, the GNSS processing module operative to decode the satellite signals to determine orbital state vector data, a satellite identification (ID), and a time stamp; an internal clock in the GNSS receiver, the internal clock configured to provide a current time to the GNSS processing module; and a spoofing detection module in operative communication with the GNSS processing module and the internal clock, the spoofing detection module comprising: a storage module that stores a latest Orbital Element at Epoch (OEE) database of the GNSS satellites; a spoof processing module operative to receive OEE data from the storage module; and a state vector prediction module in operative communication with the spoof processing module, the state vector prediction module operative to receive the OEE data from the spoof processing module, and to calculate predicted state vector data for a satellite of interest at a given time stamp of a GNSS signal; wherein the spoof processing module receives the predicted state vector data from the state vector prediction module, orbital state vector data and time stamp decoded by the GNSS processing module for the GNSS signal, and the current time from the internal clock, to perform a spoof detection process comprising: determining whether a difference between the orbital state vector data and the predicted state vector data exceeds a first threshold; and in response to determining that the difference between the orbital state vector data and the predicted state vector data does exceed the first threshold, outputting an indication that the GNSS signal is spoofed.

Example 14 includes the system of Example 13, wherein the spoof detection process performed by the spoof processing module further comprises: in response to determining that the difference between the orbital state vector data and the predicted state vector data does not exceed the first threshold, determining whether a difference between the time stamp and the current time exceeds a second threshold; in response to determining that the difference between the time stamp and the current time does exceed the second threshold, outputting an indication that the GNSS signal is spoofed; in response to determining that the difference between the time stamp and the current time does not exceed the second threshold, outputting an indication that the GNSS signal from the first satellite is not spoofed.

Example 15 includes the system of any of Examples 13-14, wherein the storage module includes a non-volatile memory that stores the latest OEE database of satellites in a GNSS constellation that is supported by the GNSS receiver.

Example 16 includes the system of any of Examples 13-15, further comprising an external clock operatively coupled to the GNSS receiver.

Example 17 includes the system of any of Examples 13-16, wherein the vehicle comprises an aerial vehicle, a ground vehicle, a marine vehicle, or an outer space vehicle.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A global navigation satellite system (GNSS) receiver, comprising:
one or more processors; and
a memory unit communicatively coupled to the one or more processors, wherein the memory unit includes a database that includes authenticated past Orbital Element at Epoch (OEE) data for satellites in a GNSS constellation supported by the GNSS receiver;
wherein the one or more processors are configured to:
receive GNSS signals from a first satellite that include first state vectors and a first time;
determine calculated state vectors for the first satellite at the first time based on the authenticated past OEE data from the database for the first satellite using a first principles-based modeling technique;
determine whether a difference between the first state vectors from the GNSS signals from the first satellite and the calculated satellite state vectors exceeds a first threshold associated with parameters of the state vectors; and
in response to determining that the difference between the first state vectors from the GNSS signals from the first satellite and the calculated satellite state vectors does exceed the first threshold, outputting an indication that the GNSS signals from the first satellite are spoofed.

2. The GNSS receiver of claim 1, wherein the one or more processors are further configured to:
determine whether a difference between the first time and a reference time exceeds a second threshold;
in response to determining that the difference between the first time and the reference time does exceed the second threshold, output an indication that the GNSS signals from the first satellite are spoofed;
in response to determining that the difference between the first time and the reference time does not exceed the second threshold, outputting an indication that the GNSS signals from the first satellite are not spoofed.

3. The GNSS receiver of claim 2, wherein the reference time is provided by a clock external to the GNSS receiver and/or by a clock internal to the GNSS receiver.

4. The GNSS receiver of claim 1, wherein the first threshold is determined based on an accuracy of the first principles-based modeling technique used to determine the calculated state vectors for the first satellite at the first time based on the authenticated past OEE data from the database for the first satellite and an age of the authenticated past OEE data for the first satellite.

5. The GNSS receiver of claim 1, wherein the one or more processors are further configured to determine a position of the GNSS receiver based on the GNSS signals from the first satellite in response to an indication that the GNSS signals from the first satellite are not spoofed.

6. The GNSS receiver of claim 1, wherein the first principles-based modeling technique includes using a simplified perturbations model.

7. The GNSS receiver of claim 1, wherein the GNSS receiver is implemented in a vehicle.

8. The GNSS receiver of claim 7, wherein the vehicle comprises an aerial vehicle, a ground vehicle, a marine vehicle, or an outer space vehicle.

9. A method comprising:
receiving a global navigation satellite system (GNSS) signal in a GNSS receiver, onboard a vehicle, from a first satellite;
decoding the GNSS signal in the GNSS receiver to obtain orbital state vector data and a first time for the first satellite;
obtaining calculated state vector data for the first satellite, based on authenticated past orbital element at epoch (OEE) data from a database for the first satellite, using a first principles-based modeling technique; and
determining whether a difference between the orbital state vector data and the calculated state vector data exceeds a first threshold;
wherein:
in response to determining that the difference between the orbital state vector data and the calculated state vector data does exceed the first threshold, outputting an indication that the GNSS signal from the first satellite is spoofed;
in response to determining that the difference between the orbital state vector data and the calculated state vector data does not exceed the first threshold, determining whether a difference between the first time and a reference time exceeds a second threshold;
in response to determining that the difference between the first time and the reference time does exceed the second threshold, outputting an indication that the GNSS signal from the first satellite is spoofed;
in response to determining that the difference between the first time and the reference time does not exceed the second threshold, outputting an indication that the GNSS signal from the first satellite is not spoofed.

10. A system comprising:
an antenna configured to receive satellite signals from a plurality of global navigation satellite system (GNSS) satellites, the antenna located on a vehicle; and
a GNSS receiver onboard the vehicle and operatively coupled to the antenna, the GNSS receiver comprising:
a GNSS processing module configured to receive the satellite signals from the antenna, the GNSS processing module operative to decode the satellite signals to determine orbital state vector data, a satellite identification (ID), and a time stamp;
an internal clock in the GNSS receiver, the internal clock configured to provide a current time to the GNSS processing module; and
a spoofing detection module in operative communication with the GNSS processing module and the internal clock, the spoofing detection module comprising:
a storage module that stores a latest Orbital Element at Epoch (OEE) database of the GNSS satellites;
a spoof processing module operative to receive OEE data from the storage module; and
a state vector prediction module in operative communication with the spoof processing module, the state vector prediction module operative to receive the OEE data from the spoof processing module, and to calculate predicted state vector data for a satellite of interest at a given time stamp of a GNSS signal;
wherein the spoof processing module receives the predicted state vector data from the state vector prediction module, orbital state vector data and time stamp decoded by the GNSS processing module for the GNSS signal, and the current time from the internal clock, to perform a spoof detection process comprising:
determining whether a difference between the orbital state vector data and the predicted state vector data exceeds a first threshold; and
in response to determining that the difference between the orbital state vector data and the predicted state vector data does exceed the first threshold, outputting an indication that the GNSS signal is spoofed.
